# FASCICULE DE BREVET EUROPEEN

(11) **EP 1 455 462 B1**
(45) Date de publication et mention de la délivrance du brevet: **04.04.2007**
(21) Numéro de dépôt: 04290277.5
(22) Date de dépôt: 02.02.2004
(51) Int. Cl.: H04B 3/44

(54) **Unité de branchement intégrable dans un système sous-marin de télécommunications, système sous-marin et procédé de reconfiguration**
Integrierbare Verzweigungseinheit in einem Unterwassersystem, Unterwassersystem und Verfahren zur dynamischen Rekonfiguration
Integrable branching unit in a submarine telecommunications system, submarine system and method for reconfiguring

(30) Priorité: 11.02.2003 FR 0301585
(43) Date de publication de la demande: 08.09.2004
(73) Titulaire: Alcatel Lucent, 75008 Paris (FR)
(72) Inventeur: Verhaege, Thierry, 91160 Saulx-les-Chartreux (FR); Cordier, Alain, 77000 Vaux-le-Penil (FR); Mejasson, Patrick, Thornton Heath, Surrey CR7 8QZ (GB)
(74) Mandataire: Lamoureux, Bernard

(56) Documents cités:
- EP-A- 0 495 509
- EP-A- 1 220 469
- US-A- 6 005 996

## Description

La présente invention concerne une unité de branchement d'un système sous-marin de télécommunications.

Les systèmes sous marins ont été disposés à l'origine pour la liaison entre deux terminaux terrestres d'alimentation électrique (Power Feed Equipment ou PFE en anglais) et optique de part et d'autre par exemple de l'Océan Atlantique. Un perfectionnement ultérieur a compris trois terminaux terrestres d'alimentation électrique et optique raccordés par une unité de branchement. Ainsi, dans sa fonction électrique, chaque terminal est connecté à une extrémité d'un conducteur électrique dont l'autre extrémité est connectée à l'une des trois bornes de l'unité de branchement.

Par extension, il peut exister plus de trois terminaux terrestres, interconnectés par le nombre adéquat de tronçons de conducteurs et d'unités de branchement, chacune de ces dernières présentant toujours trois bornes.

En fonctionnement et à un instant donné, un courant dit de tronc, typiquement de 1A, circule entre deux des trois terminaux, cette première liaison ainsi alimentée est qualifiée de tronc. Et un courant dit de branche circule entre une masse marine solidaire de l'unité de branchement et le dernier des trois terminaux, isolé du tronc, cette deuxième liaison ainsi alimentée est qualifiée de branche.

Il y a donc trois configurations possibles suivant le terminal terrestre choisi pour la branche. La fonction électrique de base d'une unité de branchement est de permettre un choix entre ces trois configurations.

Une unité de branchement classique est composée à partir de trois relais comprenant chacun un contact et une bobine qui ouvre le contact associé lorsqu'elle est alimentée en courant.

Au repos, les contacts sont fermés : les trois bornes sont réunies et il n'y aucun courant qui passe. Lorsque le courant de tronc est envoyé de l'un des terminaux de tronc, ce dernier circule dans la bobine qui commande le contact associé à la borne « de branche » et connecté au dernier terminal. L'ouverture du contact isole la branche du tronc. Lorsque le courant de tronc atteint une valeur suffisante, ce troisième terminal est relié à la masse sous-marine.

Actuellement, une reconfiguration c'est-à-dire un changement de tronc et de branche est initiée par les utilisateurs des terminaux qui envoient aux relais de l'unité de branchement les courants ajustés pour les commutations appropriées.

Une erreur humaine peut ainsi créer une reconfiguration non désirée de même qu'une perturbation passagère peut réduire le courant tronc et créer une reconfiguration fortuite.

Il a été proposé d'ajouter dans l'unité de branchement des relais supplémentaires, à commande optique, qui servent à verrouiller ou déverrouiller la configuration existante en gérant l'isolation de la branche.

Une telle unité de branchement est divulguée dans le document US-A-6 005 996.

Toutefois, l'unité de branchement se complexifie tant dans son architecture que dans son utilisation. De nouveaux états sont créés entre le passage d'une configuration à un autre. Le procédé de reconfiguration est donc difficile à mettre en oeuvre. En outre, les fonctions de verrouillage/déverrouillage ne sont pas offertes pour les contacts associés au tronc.

Enfin, par ces nouveaux relais, l'unité de branchement ne prémunit pas le système d'une erreur humaine entraînant une commutation dure (hot switching en anglais), ou fermeture d'un relais sous tension, opération susceptible de détériorer ie relais.

L'objet de l'invention est de se prémunir à la fois des reconfigurations accidentelles et des commutations dures tout en simplifiant les procédures de reconfiguration.

La présente invention propose à cet effet une unité de branchement intégrable dans un système sous-marin de télécommunications comportant au moins trois câbles ayant des éléments de transmission optiques et électriques, l'unité comprenant :
- trois bornes reliées aux éléments de transmission électriques des câbles,
- trois points d'entrée,
- trois contacts électriques, chacun étant disposé entre l'une des bornes et l'un des points d'entrée,
dans une configuration de fonctionnement, à un instant donné, une première et une deuxième des bornes étant connectées électriquement entre elles et formant un segment de tronc apte à véhiculer un courant de tronc, une troisième des bornes étant connectée électriquement à une masse sous-marine pour former un segment de branche apte à véhiculer un courant de branche,
- des moyens de reconfiguration aptes à commander les contacts électriques pour des commutations,
caractérisée en ce qu'elle comprend :
- des moyens de mesure de tension disposés pour mesurer une tension représentative du potentiel d'un point du segment de tronc,
- et, toute demande de reconfiguration, dite optique, étant réalisée à l'aide d'un signal optique dit de reconfiguration, des moyens de réception et de traitement de signaux optiques de reconfiguration,
et en ce qu'elle comprend des moyens de validation de reconfiguration, couplés auxdits moyens de mesure de tension et auxdits moyens de réception et de traitement, aptes à n'activer lesdits moyens de reconfiguration conformément audit signal optique de reconfiguration, que lorsque la valeur absolue dudit potentiel est inférieure à un seuil.

L'invention résout simplement les problèmes de commande par courant seul en évitant à la fois les reconfigurations accidentelles et les commutations dures, ceci par un double niveau d'autorisation : la demande optique conforme est mise en application sous réserve de la valeur du potentiel au niveau du segment de tronc.

En outre, le potentiel au niveau du segment de tronc, qui dépend de sa position par rapport aux deux terminaux terrestres et de leurs potentiels respectifs, peut atteindre plusieurs kV. Dans l'art antérieur, toute commutation fortuite à ce niveau de potentiel risque d'endommager les contacts.

La valeur du seuil est donc choisie faible, ceci pour éviter de fermer des contacts sous forte tension ce qui risque de les détruire.

Aussi, l'unité de branchement selon l'invention est auto protégée tout en restant opérationnelle.

Avantageusement, les moyens de mesure de tension peuvent être associés à un diviseur de tension monté entre ledit point du segment de tronc et un point du segment de branche.

Ainsi, on mesure une petite tension proportionnelle à la tension entre ces deux segments pour préserver les composants des moyens de mesure.

Le diviseur de tension peut être de type résistif et comprendre au moins un première résistance connectée à une extrémité à l'un desdits points de segment de tronc et de segment de branche et à l'autre extrémité à une deuxième résistance, de valeur supérieure à la valeur de la première résistance, qui est connectée à l'autre desdits points de segment de tronc et de segment de branche.

Un diviseur de tension résistif est préféré à un diviseur capacitif pour une meilleure longévité.

De préférence, le seuil peut être inférieur ou égal à 100 V.

Dans un mode de réalisation préféré, les trois contacts électriques, dits glissants, sont électromécaniques.

Et chaque contact électrique est formé d'une première pièce conductrice mobile et d'une deuxième pièce conductrice, les premières pièces mobiles étant accolées aux deuxièmes pièces en configuration de fonctionnement et à déplacement par glissement sur les deuxièmes pièces pour les commutations.

Cette structure particulière des contacts glissants présente l'avantage, par rapport aux contacts à relais, d'être insensible aux fluctuations de courant et simplifie l'architecture de l'unité de branchement, les bobines n'étant plus nécessaires.

Dans un mode de réalisation avantageux, les pièces conductrices mobiles sont solidaires d'un même support mobile pour des commutations simultanées, afin de réduire le nombre d'étapes de commutation à réaliser.

Et de préférence, les commutations sont couplées et les longueurs des pièces conductrices mobiles sont supérieures aux espacements entre deux deuxièmes pièces.

Pour les trois configurations possibles de fonctionnement, le courant de tronc va passer dans une même ligne électrique montée entre les premier et deuxième points d'entrée et le courant de branche va toujours passer dans une autre ligne électrique montée entre le troisième point d'entrée et la masse marine. Aussi, les mêmes moyens selon l'invention sont utilisés pour chacune des trois configurations possibles.

Les bornes d'entrées sont ainsi affectées à la ligne électrique fixée par la configuration de fonctionnement souhaitée. Cette affectation est obtenue par un ajustement des positions des contacts grâce à la mobilité des premières pièces.

En outre, le choix des longueurs garantit contre toute position de circuit ouvert : il y a transitoirement double contact lors des commutations couplées. Les contacts sont préservés des phénomène d'arc qui se créent lorsque l'on ouvre des contacts dans lesquels circule un courant.

En outre, les doubles contacts transitoires ne posent pas de problème : les positions de double contact donnent les bornes à la terre ce qui n'est pas gênant en particulier lorsque le segment de tronc et le segment de branche sont sensiblement à des potentiels proches de 0 V.

De manière avantageuse, les contacts glissants peuvent être choisis parmi les contacts à déplacement rectiligne et les contacts à déplacement suivant un axe de rotation.

De préférence, l'unité de branchement selon l'invention peut comprendre des moyens d'identification de l'existence et du signe du courant de tronc aux première et deuxième bornes et de l'existence et du signe du courant de branche à la troisième borne.

En outre, ladite demande optique définissant deux des trois bornes pour former un tronc dit reconfiguré, les moyens de validation de reconfiguration sont alors aptes à n'autoriser la demande optique que lorsque les courants aux bornes définies pour le tronc reconfiguré sont, dans la configuration de fonctionnement, de signes opposés ou nuls

De préférence, l'unité de branchement peut comprendre des moyens de mémorisation du signal optique de configuration, mémorisation par exemple pendant un délai donné et/ou jusqu'à la validation de la reconfiguration.

Dans un mode de réalisation avantageux, l'unité de branchement comprend au moins une première carte électronique de contrôle, alimentée par l'un des courants de tronc et de branche et incorporant l'ensemble desdits moyens.

Et de préférence, elle comprend une deuxième carte électronique de contrôle alimentée par l'autre des courants de tronc et de branche et comprenant des moyens similaires auxdits moyens de la première carte.

Lorsqu'un défaut par exemple dans la branche crée un court circuit à la mer, l'une des deux cartes n'est plus alimentée et ne peut donc gérer la validation de la reconfiguration. Aussi, l'emploi de deux cartes renforce la protection de l'unité de branchement même en cas de problèmes sur le réseau et préserve toute reconfiguration accidentelle.

L'invention s'applique naturellement à un système sous-marin de télécommunications comprenant :
- au moins trois équipements choisis parmi des terminaux terrestres et des unités de branchement et connectés auxdits câbles, au moins l'un desdits équipements étant connecté ou correspondant à un terminal terrestre comprenant des moyens d'envoi de signaux optiques de configuration,
- au moins une unité de branchement telle que définie précédemment.

L'invention s'applique également à un procédé de reconfiguration d'un système sous-marin de télécommunications tel que défini précédemment comprenant :
- une opération d'envoi dudit signal optique de reconfiguration à ladite unité de branchement,
- une opération de mesure de tension par lesdits moyens de mesure de tension,
- une opération de validation de la reconfiguration conformément audit signal optique de reconfiguration, lorsque la valeur absolue dudit potentiel est inférieure audit seuil,
- une opération de reconfiguration comprenant des commutations desdits contacts électriques.

De préférence, les commutations peuvent être réalisées par des déplacements simultanés et couplés des premières pièces des contacts glissants.

Dans un premier mode de réalisation, le procédé peut comprendre, avant ladite opération d'envoi, une opération d'ajustement des tensions de terminaux terrestres associés au courant de tronc de façon à obtenir ledit seuil avec un maintien du courant de tronc.

Dans un deuxième mode de réalisation, le procédé peut comprendre, après ladite opération d'envoi, une opération de correction progressive des tensions de terminaux terrestres d'alimentation associés au courant de tronc de façon à obtenir ledit seuil avec un maintien du courant de tronc.

Les particularités et avantages de l'invention apparaîtront clairement à la lecture de la description qui suit, faite à titre d'un exemple illustratif et non limitatif et faite en référence aux figures annexées dans lesquelles
- la figure 1 représente schématiquement un système sous-marin de télécommunications intégrant une unité de branchement dans un mode de réalisation préféré de l'invention,
- la figure 2 représente schématiquement l'unité de branchement de la figure 1.

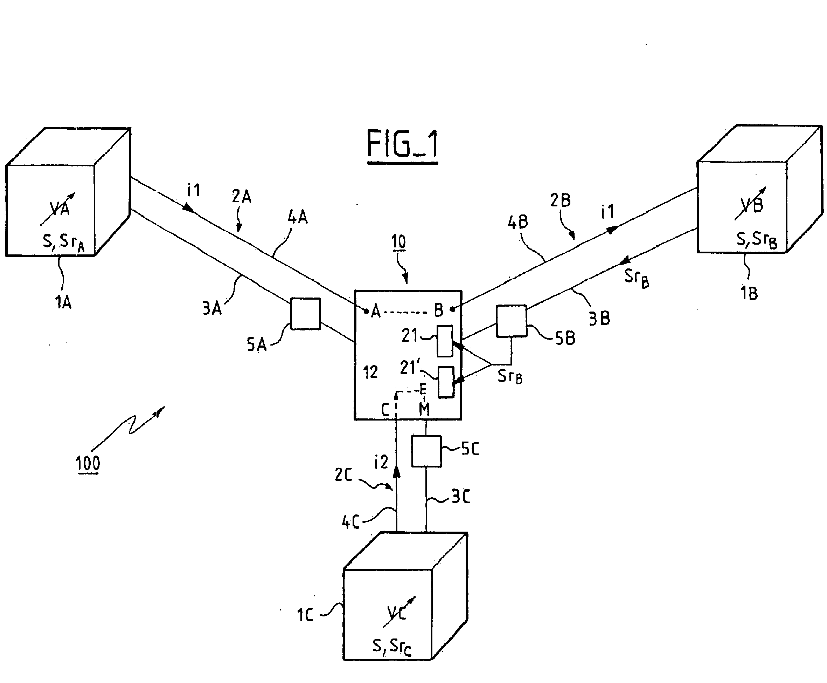

On voit en figure 1 un système sous-marin de télécommunications 100 intégrant une unité de branchement 10 dans un mode de réalisation préféré de l'invention.

Le système sous-marin de télécommunications 100 comprend trois terminaux terrestres d'alimentation électrique et optique 1A, 1 B, 1 C, connectés à l'une des extrémités de trois câbles 2A, 2B, 2C respectivement comprenant chacun une fibre optique 3A, 3B, 3C pour la propagation de signaux optiques S et un conducteur électrique 4A, 4B, 4C.

Chaque conducteur électrique 4A, 4B, 4C est en outre relié à une borne A, B, C respectivement de l'unité de branchement 10.

Dans une première configuration de fonctionnement choisie à titre d'exemple, le tronc est la liaison entre les premier et deuxième terminaux 1A, 1 B de tension réglable VA, VB par exemple respectivement égale à +6 kV et à -4 kV.

La première borne A et la deuxième borne B sont électriquement connectées, formant un segment de tronc (en pointillés) de potentiel par exemple de +3 kV. Un courant de tronc i1 circule ainsi depuis le premier terminal 1A jusqu'au deuxième terminal 1B, la première borne A est la borne d'entrée du courant de tronc et la deuxième borne B est la borne de sortie du courant de tronc.

Par ailleurs, la branche est la liaison entre le troisième terminal 1C de tension réglable VC par exemple égale à +10 kV et une masse marine M de l'unité de branchement 10. Un courant de branche i2 circule ainsi depuis le troisième terminal 1C jusqu'à la masse marine M, la troisième borne C est la borne d'entrée du courant de branche 12 qui forme avec la masse marine un segment de branche (en pointillés) de potentiel proche de 0 V.

Selon l'invention, la demande de reconfiguration est optique et réalisée par l'envoi d'un signal optique de reconfiguration contenant des informations de reconfiguration.

Un signal optique de reconfiguration Sr_{B} est délivré, par exemple par l'intermédiaire d'un coupleur 5B dans la fibre optique 3B, à des premiers moyens de réception et de traitement 21 de signaux optiques de reconfiguration, de préférence doublés par des deuxièmes moyens similaires 21', voire triplés. Ces moyens 21, 21' sont de préférence capables de recevoir et de décoder tout signal optique de reconfiguration Sr_{A}, Sr_{B}, Sr_{C} venant d'un quelconque des terminaux 1 A, 1 B, 1 C dotés des moyens d'envoi appropriés (non représentés).

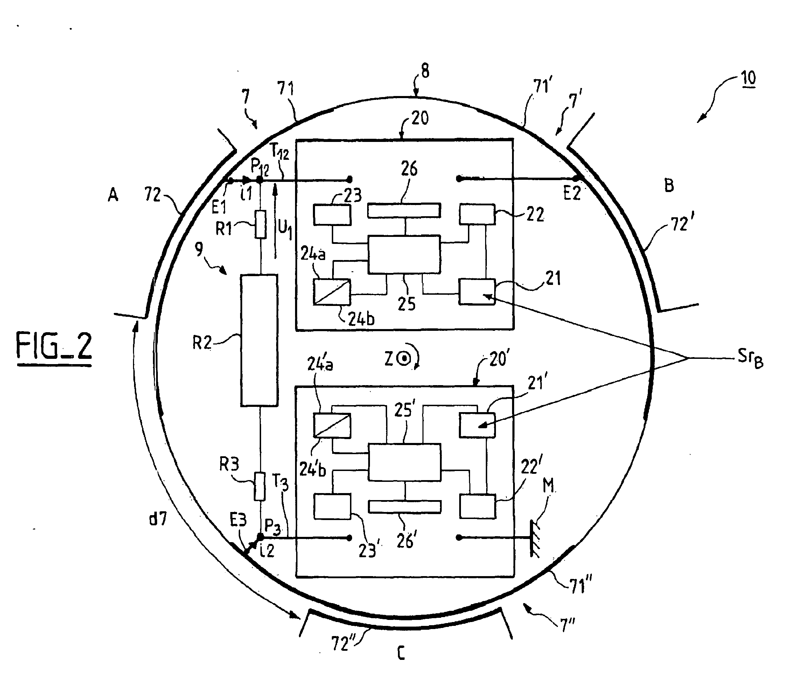

La figure 2 représente schématiquement l'unité de branchement 10 dont nous détaillerons principalement l'architecture associée à sa fonction de raccordement électrique.

L'unité de branchement 10 comprend trois points d'entrée E1, E2, E3 en contact électrique avec les bornes A, B, C respectivement, lors de la première configuration de fonctionnement décrite en figure 1, au moyen de trois contacts électromécaniques 7, 7', 7" et de préférence de type glissant. Les bornes A et B sont ainsi réunies pour former le segment de tronc incluant le circuit électrique T12 et la borne C et la masse M sont réunies pour former le segment de branche incluant le circuit électrique T3.

Dans toute configuration, le circuit électrique T12 est affecté au passage du courant de tronc et le circuit électrique T3 est affecté au passage du courant de branche.

Chaque contact glissant 7, 7', 7" est formé d'une première pièce conductrice mobile (représentée en gras) 71, 71', 71" et d'une deuxième pièce conductrice fixe 72, 72', 72" (représentée en gras). Les premières pièces mobiles 71, 71', 71" sont, dans la première configuration de fonctionnement, accolées aux deuxièmes pièces 72, 72', 72" respectivement.

Les pièces mobiles 71, 71', 71" sont solidaires d'un même support mobile 8 pour des commutations simultanées et de préférence couplées.

Les longueurs des pièces mobiles 71, 71', 71" sont supérieures aux espacements d7 entre deux deuxièmes pièces 72, 72', 72" pour créer des double contacts transitoires pendant les trois commutations simultanées.

L'unité de branchement 10 comprend en outre une première carte électronique de contrôle 20, alimentée par le courant de tronc i1, qui comporte :
- les premiers moyens 21 de réception et de traitement de signaux optiques de reconfiguration Sr_{B},
- de préférence, des premiers moyens de mémorisation 22 de signaux optiques de configuration,
- des premiers moyens de mesure de tension 23 disposés pour mesurer une tension U₁ informant du potentiel d'un point quelconque du segment de tronc P₁₂, par exemple côté entrée du courant de tronc,
- de préférence, des premiers moyens d'identification 24a de l'existence et du signe du courant de tronc et des premiers moyens d'identification 24b de l'existence et du signe du courant de branche,
- des premiers moyens de validation de reconfiguration 25, couplés aux moyens 21 à 24 et aptes à autoriser ou interdire la reconfiguration,
- des premiers moyens de reconfiguration 26, couplés aux moyens de validation de reconfiguration 25, aptes à commander les commutations de contacts 7, 7', 7" après la validation.

L'unité de branchement 10 comprend de préférence une deuxième carte électronique de contrôle 20', alimentée par le courant de branche i2, qui comporte des deuxièmes moyens 21' à 26' similaires aux premiers moyens 21 à 26.

Il y a donc reconfiguration lorsqu'au minimum deux conditions sont remplies :
- s'il y a réception d'un signal optique de reconfiguration et décodage possible pour une lecture des informations de reconfiguration,
- si le potentiel du segment de tronc est en valeur absolue inférieur à un seuil qui est de préférence inférieur ou égal à 100 V.

En outre, de préférence, la demande optique définissant deux des trois bornes pour former un tronc, la reconfiguration est autorisée lorsque les courants aux deux bornes choisies pour ce tronc sont, dans la première configuration, nuls ou de signes opposés.

A titre d'exemple, à partir de la première configuration, une reconfiguration définissant la borne B dans une branche et définissant les bornes A et C dans un tronc dit reconfiguré est interdite, alors qu'il est permis de reconfigurer en définissant la borne A dans une branche et les bornes C et B dans un tronc reconfiguré.

Les premiers et deuxièmes moyens de mesure de tension 21, 21' sont associés à un diviseur de tension classique 9 monté entre le point du segment de tronc P₁₂ et un point quelconque du segment de branche P₃ par exemple côté entrée du courant de branche i2.

Le diviseur de tension 9 est de préférence de type résistif et comprend un première résistance R1 connectée à une extrémité au point du segment de tronc P₁₂ et en série avec une deuxième résistance R2, de valeur très supérieure à la valeur de la première résistance, elle-même en série avec une troisième résistance R3 similaire à la première résistance R1 et connectée au point P₃ de segment de branche.

Lorsqu'une reconfiguration est autorisée il y a trois commutations : les pièces mobiles 71, 71', 71" se déplacent par glissement sur les deuxièmes pièces 72, 72', 72" suivant un axe de rotation Z par simple rotation du support mobile 8.

Par exemple, pour la reconfiguration avec la borne A dans une branche, le support mobile 8 effectue une rotation de 120° dans le sens des aiguilles d'une montre. Pendant la phase des commutations, les pièces mobiles 71, 71', 71" entrent en contact commun avec les deuxièmes pièces 72, 72', 72" et d'autres deuxièmes pièces 72', 72", 72 respectivement.

Bien entendu, on veillera à ce que le fonctionnement des premiers et deuxièmes moyens de reconfiguration 26, 26' en parallèle n'amène qu'aux seules commutations souhaitées, en ajustant la logique de commande de déplacement du support mobile 8. Le procédé de reconfiguration conforme à l'invention comporte donc:
- une opération d'envoi du signal optique de reconfiguration Sr_{B} à l'unité de branchement 10,
- une opération de mesure de tension par les premiers et/ou deuxièmes moyens de mesure de tension 23, 23',
- une opération de validation de la reconfiguration par les premiers et/ou deuxièmes moyens de validation de reconfiguration 25, 25', conformément audit signal optique de reconfiguration lorsque la valeur absolue du potentiel du segment de tronc P₁₂ est inférieure au seuil,
- une opération de reconfiguration comprenant des commutations des contacts électriques 7, 7', 7" commandés par les premiers et/ou deuxièmes moyens de reconfiguration 26, 26'.

Dans une première méthode pour aboutir à la validation intervient, avant l'opération d'envoi, une opération d'ajustement des tensions réglables VA, VB des terminaux terrestres de tronc 1A, 1B de façon à obtenir le seuil tout en maintenant le courant de tronc.

Dans une deuxième méthode pour aboutir à la validation intervient, après l'opération d'envoi, une opération de correction progressive des tensions réglables VA, VB des terminaux terrestres de tronc 1A, 1 B de façon à obtenir le seuil tout en maintenant le courant de tronc.

Dans l'exemple choisi, lorsque la tension VA devient égale à +3 kV et la tension VB devient égale à -7 kV le potentiel du segment de tronc P₁₂ vaut 0 V : la tension mesurée U1est donc inférieure au seuil : il y a reconfiguration possible conformément à un signal optique de reconfiguration.

Dans une variante du mode de réalisation préféré, les contacts sont à déplacement rectiligne.

Bien entendu, la description qui précède a été donnée à titre purement illustratif. On pourra sans sortir du cadre de l'invention remplacer tout moyen par un moyen équivalent.

## Revendications

1. Unité de branchement (10) intégrable dans un système sous-marin de télécommunications (100) comportant au moins trois câbles (2A à 2C) ayant des éléments de transmission optiques et électriques (3A à 3C, 4A à 4C), l'unité comprenant :
- trois bornes (A, B, C) reliées aux éléments de transmission électriques des câbles,
- trois points d'entrée (E1, E2, E3),
- trois contacts électriques (7 à 7"), chacun étant disposé entre l'une des bornes et l'un des points d'entrée,
dans une configuration de fonctionnement, à un instant donné, une première et une deuxième (A, B) des bornes étant connectées électriquement entre elles et formant un segment de tronc apte à véhiculer un courant de tronc (i1), une troisième (C) des bornes étant connectée électriquement à une masse sous-marine (M) pour former un segment de branche apte à véhiculer un courant de branche (i2),
- des moyens de reconfiguration (26) aptes à commander les contacts électriques (7 à 7") pour des commutations,
**caractérisée en ce qu**'elle comprend :
- des moyens de mesure de tension (23) disposés pour mesurer une tension (U₁) informant du potentiel d'un point du segment de tronc (P₁₂),
- et, toute demande de reconfiguration, dite optique, étant réalisée à l'aide d'un signal optique dit de reconfiguration (Sr_{B}), des moyens de réception et de traitement (21') de signaux optiques de reconfiguration (Sr_{A}, Sr_{B}, Sr_{C}),
**et en ce qu**'elle comprend des moyens de validation de reconfiguration (25), couplés auxdits moyens de mesure de tension et auxdits moyens de réception et de traitement, aptes à n'activer lesdits moyens de reconfiguration conformément audit signal optique de reconfiguration, que lorsque la valeur absolue dudit potentiel est inférieur à un seuil.

2. Unité de branchement (10) selon la revendication 1 **caractérisée en ce que** les moyens de mesure de tension (23) sont associés à un diviseur de tension (9) monté entre ledit point du segment de tronc (P₁₂) et un point du segment de branche (P₃).

3. Unité de branchement (10) selon la revendication 2 **caractérisée en ce que** le diviseur de tension (9) est de type résistif et comprend au moins un première résistance (R1) connectée à une extrémité à l'un desdits points de segment de tronc et de segment de branche (P₁₂) et à l'autre extrémité à une deuxième résistance (R2), de valeur supérieure à la valeur de la première résistance, qui est connectée à l'autre desdits points de segment de tronc et de segment de branche (P₃).

4. Unité de branchement (10) selon l'une des revendications 1 à 3 **caractérisée en ce que** ledit seuil est inférieur ou égal à 100 V.

5. Unité de branchement (10) selon l'une des revendications 1 à 4 **caractérisée en ce que** les trois contacts électriques (7 à 7"), dits glissants, sont électromécaniques, chaque contact électrique étant formé d'une première pièce conductrice mobile (71 à 71") et d'une deuxième pièce conductrice (72 à 72"), les premières pièces mobiles étant accolées aux deuxièmes pièces en configuration de fonctionnement et à déplacement par glissement sur les deuxièmes pièces pour des commutations.

6. Unité de branchement (10) selon la revendication 5 **caractérisée en ce que** les pièces conductrices mobiles (71 à 71") sont solidaires d'un même support mobile (8) pour des commutations simultanées et de préférence les commutations sont couplées et les longueurs des pièces conductrices mobiles sont supérieures aux espacements (d7) entre deux deuxièmes pièces (72 à 72").

7. Unité de branchement (10) selon l'une des revendication 5 ou 6 **caractérisée en ce que** les contacts glissants (7 à 7") sont choisis parmi les contacts à déplacement rectiligne et les contacts à déplacement suivant un axe de rotation (Z).

8. Unité de branchement (10) selon l'une des revendications 1 à 7 **caractérisée en ce qu**'il comprend des moyens d'identification (24a) de l'existence et du signe du courant de tronc (i1) aux première et deuxième bornes (A, B) et des moyens d'identification (24b) de l'existence et du signe du courant de branche (i2) à la troisième borne (C) et en ce que, ladite demande optique définissant deux des trois bornes pour former un tronc dit reconfiguré, les moyens de validation de reconfiguration (25) sont aptes à n'autoriser la demande optique que lorsque les courants aux bornes définies pour le tronc reconfiguré sont, dans la configuration de fonctionnement, de signes opposés ou nuls.

9. Unité de branchement (10) selon l'une des revendications 1 à 8 **caractérisée en ce qu**'elle comprend des moyens de mémorisation (22) dudit signal optique de configuration.

10. Unité de branchement (10) selon l'une des revendications 1 à 9 **caractérisée en ce qu**'elle comprend au moins une première carte électronique (20) de contrôle, alimentée par l'un des courants de tronc et de branche (i1) et incorporant l'ensemble desdits moyens (21 à 26) et, de préférence une deuxième carte électronique de contrôle (20') alimentée par l'autre des courants de tronc et de branche (i2) comprenant des moyens (21' à 26') similaires auxdits moyens de la première carte.

11. Système sous-marin de télécommunications (100) comprenant :
- au moins trois équipements (1A à 1C) choisis parmi des terminaux terrestres et des unités de branchement et connectés auxdits câbles (2A à 2C), au moins l'un desdits équipements étant connecté ou correspondant à un terminal terrestre (1A à 1C) comprenant des moyens d'envoi de signaux optiques de configuration (Sr_{A} à Sr_{C}),
- au moins une unité de branchement (10) définie selon l'une des revendications 1 à 10.

12. Procédé de reconfiguration d'un système sous-marin de télécommunications (100) défini selon la revendication 11 comprenant :
- une opération d'envoi dudit signal optique de reconfiguration (Sr_{B}) à ladite unité de branchement (10),
- une opération de mesure de tension par lesdits moyens de mesure de tension (23, 23'),
- une opération de validation de la reconfiguration, conformément audit signal optique de reconfiguration, lorsque la valeur absolue dudit potentiel est inférieure audit seuil,
- une opération de reconfiguration comprenant des commutations desdits contacts électriques (7 à 7").

13. Procédé de reconfiguration d'un système sous-marin de télécommunication (100) selon la revendication 12 **caractérisé en ce que** les commutations sont réalisées par des déplacements simultanés et couplés des premières pièces mobiles (71 à 71") des contacts glissants (7 à 7").

14. Procédé de reconfiguration d'un système sous-marin de télécommunication (100) selon l'une des revendications 12 ou 13 **caractérisé en ce qu**'il comprend, avant ladite opération d'envoi, une opération d'ajustement des tensions (VA, VB) de terminaux terrestres (1A, 1B) associés au courant de tronc (i1) de façon à obtenir ledit seuil avec un maintien du courant de tronc.

15. Procédé de reconfiguration d'un système sous-marin de télécommunication (100) selon l'une des revendications 12 ou 13 **caractérisé en ce qu**'il comprend, après ladite opération d'envoi, une opération de correction progressive des tensions (VA, VB) de terminaux terrestres (1A, 1 B) associés au courant de tronc (i1) de façon à obtenir ledit seuil avec un maintien du courant de tronc.

## Claims

1. Branching unit (10) adapted to be integrated into a submarine telecommunication system (100) comprising at least three cables (2A to 2C) having optical and electrical transmission members (3A to 3C, 4A to 4C), the unit comprising:
- three terminals (A, B, C) connected to the electrical transmission members of the cables,
- three input points (E1, E2, E3), and
- three electrical contacts (7 to 7") each between one of the terminals and one of the input points,
in an operating configuration, and at a given time, a first terminal and a second terminal (A, B) are electrically connected together and form a trunk segment adapted to convey a trunk current (i1), and a third terminal (C) is electrically connected to a submarine ground (M) to form a branch segment adapted to convey a branch current (i2),
- reconfiguration means (26) adapted to control the electrical contacts (7 to 7") for switching purposes,
**characterized in that** it comprises:
- voltage measuring means (23) for measuring a voltage (U₁) indicating the potential at a point on the trunk segment P₁₂,
- means (21') for receiving and processing optical reconfiguration signals (Sr_{A}, Sr_{B}, Sr_{C}), any optical reconfiguration request being made by means of an optical reconfiguration signal (Sr_{B}),
and **in that** it comprises reconfiguration validation means (25) coupled to said voltage measuring means and to said reception and processing means and adapted to activate said reconfiguration means in accordance with said optical reconfiguration signal only if the absolute value of said potential is below a threshold.

2. The branching unit claimed in claim 1 wherein the voltage measuring means (23) are associated with a voltage divider (9) between said point on the trunk segment (P₁₂) and a point on the branch segment (P₃).

3. The branching unit claimed in claim 2 wherein the voltage divider (9) is of the resistive type and comprises at least one first resistor (R1) connected to one end of one of said trunk segment points and branch segment points (P₁₂) and at the other end to a second resistor (R2) of greater value than the first resistor and connected to the other of said trunk segment and branch segment points (P₃)

4. The branching unit claimed in any of claims 1 to 3 wherein said threshold is less than or equal to 100 V.

5. The branching unit claimed in any of claims 1 to 4 wherein the three sliding electrical contacts (7 to 7") are electromechanical, each electrical contact is formed of a mobile first conductive part (71 to 71") and a second conductive part (72 to 72"), and the first mobile parts are fastened to the second parts in an operating configuration and having displacement by sliding on the second parts for switching.

6. The branching unit claimed in claim 5 wherein the mobile conductive parts (71 to 71") are fastened to the same mobile support (8) for the simultaneous switching, preferably the switching operations are coupled, and the lengths of the mobile conductive parts are greater than the spaces (d7) between two second parts (72 to 72").

7. The branching unit claimed in claim 5 or 6 wherein the sliding contacts (7 to 7") are chosen from contacts that move in a straight line and contacts that move about a rotation axis (Z).

8. The branching unit claimed in any of claims 1 to 7, **characterised in that** it comprises means (24a) for identifying the existence and the sign of the trunk current (i1) at the first and second terminals (A, B) and means (24b) for identifying the existence and the sign of the branch current (i2) at the third terminal (C) and **in that** said optical request defines two of the three terminals to form a reconfigured trunk and the reconfiguration validation means (25) are adapted to authorise the optical request only if the currents at the terminals defined for the reconfigured trunk are of opposite sign or zero in the operating configuration

9. The branching unit claimed in any of claims 1 to 8, charcterised in that it comprises means (22) for storing said optical configuration signal.

10. The branching unit claimed in any of claims 1 to 9, **characterised in that** it comprises at least one first electronic control card (20) supplied with power by one of the trunk and branch currents (11) and incorporating all of said means (21 to 26) and, preferably, a second electronic control card (20') supplied by the other of the trunk and branch currents (12) and comprising means (21' to 26') similar to said means of the first card.

11. Submarine telecommunication system (100) comprising
- at least three equipments (1A to 1C) chosen from terrestrial terminals and branching units and connected to said cables (2A to 2C), at least one of said equipments being connected to or corresponding to a terrestrial terminal (1A to 1C) comprising means for sending optical configuration signals (Sr_{A}, Sr_{C}), and
- at least one branching unit (10) according to any of claims 1 to 10.

12. Method of reconfiguring a submarine telecommunication system (100) according to claim 11 comprising:
- sending said optical reconfiguration signal (Sr_{B}) to said branching unit (10),
- voltage measurement by said voltage measuring means (23, 23').
- validation of reconfiguration in accordance with said optical reconfiguration signal if the absolute value of said potential is below said threshold, and
- reconfiguration comprising switching said electrical contacts (7 to 7").

13. Method according to claim 12 of reconfiguring a submarine telecommunication system (100) wherein switching is effected by simultaneous and coupled movements of the mobile first parts (71 to 72") of the sliding contacts (7 to 7").

14. Method according to claim 12 or 13 of reconfiguring a submarine telecommunication system (100) **characterised in that** it comprises, before said sending, adjusting voltages (VA, VB) at terrestrial terminals (1A, 1B) associated with the trunk current (i1) to obtain said threshold whilst maintaining the trunk current.

15. Method according to claim 12 or 13 of reconfiguring a submarine telecommunication system (100) **characterised in that** it comprises, after said sending, progressively correcting the voltages (VA, VB) at terrestrial terminals (1A, 1B) associated with the trunk current (11) in order to obtain said threshold whilst maintaining said trunk current.

## Patentansprüche

1. Verzweigungseinheit (10), die in ein Telekommunikations-Unterwassersystem (100) eingebaut werden kann, bestehend aus mindestens drei Kabeln (2A bis 2C) mit optischen und elektrischen Übertragungselementen (3A bis 3C, 4A bis 4C), wobei die Einheit Folgendes umfasst:
- drei Anschlüsse (A, B, C), die mit den elektrischen Übertragungselementen der Kabel verbunden sind,
- drei Eingangspunkte (E1, E2, E3),
- drei elektrische Kontakte (7 bis 7"), wobei jeder zwischen einem der Anschlüsse und einem der Eingangspunkte angeordnet ist,
in einer Betriebskonfiguration, wobei zu einem gegebenen Zeitpunkt ein erster und ein zweiter (A, B) der Anschlüsse elektrisch miteinander verbunden sind und einen Stammabschnitt bilden, der in der Lage ist, einen Stammstrom (i1) zu transportieren, wobei ein dritter Anschluss (C) elektrisch mit einer Unterwassermasse (M) verbunden ist, um einen Zweigabschnitt zu bilden, der in der Lage ist, einen Zweigstrom (i2) zu transportieren,
- Vorrichtungen zur Rekonfiguration (26), die in der Lage sind, die elektrischen Kontakte (7 bis 7'') für Schaltvorgänge zu steuern,
**dadurch gekennzeichnet, dass** sie Folgendes umfasst:
- Vorrichtungen zur Messung der Spannung (23), die entsprechend angeordnet sind, um eine Spannung (U₁) zu messen, die Auskunft über das Potenzial an einem Punkt im Stammabschnitt (P₁₂) gibt,
- und wobei jede Anforderung zur so genannten optischen Rekonfiguration mit Hilfe eines so genannten optischen Rekonfigurationssignals (Sr_{B}) sowie Vorrichtungen zum Empfang und zur Verarbeitung (21') von optischen Rekonfigurationssignalen (Sr_{A}, Sr_{B}, Sr_{C}) durchgeführt wird,
**sowie dadurch, dass** sie Vorrichtungen zur Validierung der Rekonfiguration (25) umfasst, die mit den genannten Vorrichtungen zur Messung der Spannung und den genannten Empfangs- und Verarheitungsvorrichtungen gekoppelt und in der Lage sind, die genanaten Vorrichtungen zur Rekonfiguration nur dann entsprechend dem genannten optischen Rekonfigurationssignal zu aktivieren, wenn der absolute Wert des genannten Potenzials unter einem Grenzwert liegt.

2. Verzweigungseinheit (10) gemäß Anspruch 1, **dadurch gekennzeichnet, dass** die Vorrichtungen zur Messung der Spannung (23) einem Spannungsteiler (9) zugeordnet sind, der zwischen dem genannten Punkt im Stammabschnitt (P₁₂) und einem Punkt im Zweigabschnitt (P₃) angeordnet ist.

3. Verzweigungseinheit (10) gemäß Anspruch 2, **dadurch gekennzeichnet, dass** der Spannungsteiler (9) resistiven Typs ist und mindestens einen ersten Widerstand (R1) umfasst, der an einem Ende mit einem der genannten Punkte im Scammabschnitt und im Zweigabschnitt (P₁₂) und am anderen Ende mit einem zweiten Widerstand (R2) verbunden ist, der einen höheren Wert als der Wert des ersten Widerstands aufweist, der mit dem anderen der genannten Punkte im Stammabschnitt und im Zweigabschnitt (P₃) verbunden ist.

4. Verzweigungseinheit (10) gemäß einem der Ansprüche 1 bis 3, **dadurch gekennzeichnet, dass** der genannte Grenzwert unter oder gleich 100 V betragt.

5. Verzweigungseinheit (10) gemäß einem der Ansprüche 1 bis 4, **dadurch gekennzeichnet, dass** die drei elektrischen Kontakte (7 bis 7''), die so genannten Gleitkontakte, elektzomechanisch sind, wobei jeder elektrische Kontakt aus einem ersten beweglichen, leitfähigen Teil (71 bis 71'') und einem zweiten leitfähigen Teil (72 bis 72'') gebildet wird, wobei die ersten beweglichen Teile in der Betriebskonfiguration an die zweiten Teile angefügt werden und zu Schaltvorgängen durch Gleiten auf die zweiten Teile verschoben werden können.

6. Verzweigungseinheit (10) gemäß Anspruch 5, **dadurch gekennzeichnet, dass** die beweglichen, leitfähigen Teile (71 bis 71'') für gleichzeitige Schaltvorgänge fest mit dem gleichen beweglichen Träger (3) verbunden sind und die Schaltvorgänge vorzugsweise miteinander gekoppelt sind und die Länge der beweglichen, leitfähigen Teile größer ist als der Abstand (d7) zwischen den beiden zweiten Teilen (72 bis 72").

7. Verzweigungseinheit (10) gemäß einem der Ansprüche 5 oder 6, **dadurch gekennzeichnet, dass** die Gleitkontakte (7 bis 7") unter Kontakten mit geradliniger Verschiebung und Kontakten mit Verschiebung in einer Drehachse (Z) gewählt werden können.

8. Verzweigungseinheit (10) gemäß einem der Ansprüche 1 bis 7, **dadurch gekennzeichnet, dass** sie Vorrichtungen zur Feststellung (24a) von Vorhandensein und Vorzeichen des Stammstroms (i1) am ersten und zweiten Anschluss (A, B) sowie Vorrichtungen zur Feststellung (24b) von Vorhandensein und Vorzeichen des Zweigstroms (i2) am dritten Anschluss (C) umfasst, sowie **dadurch**, dass die Vorrichtungen zur Validierung der Rekonfiguration (25) in der Lage sind, wobei die genannte optische Anforderung zwei Anschlüsse zur Bildung eines so genannten rekonfigurierten Stamms definiert, die optische Anfrage nur dann freizugeben, wenn die Ströme an den für den rekonfigurierten Stamm definierten Anschlüssen in der Betriebskonfiguration entgegengesetzte Vorzeichen aufweisen oder gleich Null sind.

9. Verzweigungseinheit (10) gemäß einem der Ansprüche 1 bis 8, **dadurch gekennzeichnet, dass** sie Vorrichtungen zur Speicherung (22) des genannten optischen Konfigurationssignals umfasst.

10. Verzweigungseinheit (10) gemäß einem der Ansprüche 1 bis 9, **dadurch gekennzeichnet, dass** sie mindestens eine elektronische Steuerungskarte (20), die von dem Stamm- oder dem Zweigstrom (i1) versorgt wird und sämtliche genannten Vorrichtungen (21 bis 26) umfasst, sowie vorzugsweise eine zweite elektronische Steuerungskarte (20') umfasst, die von dem anderen Stamm- oder Zweigstrom (i2) versorgt wird, die ähnliche Vorrichtungen (21' bis 26') wie die genannten Vorrichtungen der ersten Karte umfasst.

11. Telekommunikations-Unterwassersystem (100), das Folgendes umfasst:
- mindestens drei Geräte (1A bis 1C), die aus terrestrischen Terminals und Verzweigungseinheiten gewählt werden und mit den genannten Kabeln (2A bis 2C) verbunden sind, wobei mindestens eines der genannten Geräte mit einem terrestrischen Terminal (1A bis 1C) verbunden ist oder diesem entspricht, das Vorrichtungen zur Übertragung von optischen Konfigurationssignalen (Sr_{A} bis Sr_{B}) umfasst,
- mindestens eine Verzweigungseinheit (10) gemäß einem der Ansprüche 1 bis 10.

12. Verfahren zur Rekonfiguration eines Telekommunikations-Unterwassersystems (100) gemäß Anspruch 11, das Folgendes umfasst:
- einen Schritt zur Übertragung des genannten optischen Rekonfigurationssignals (Sr_{B}) an die genannte Verzweigungseinheit (10).
- einen Schritt zur Messung der Spannung durch die genannten Vorrichtungen zur Spannungsmessung (23, 23'),
- einen Schritt zur Validierung der Rekonfiguration entsprechend dem genannten optischen Rekonfigurationasignal, wenn der absolute Wert des genannten Potenzials unter dem genannten Grenzwert liegt,
- einen Schritt zur Rekonfiguration, der Schaltvorgänge der genannten elektrischen Kontakte (7 bis 7'') umfasst.

13. Verfahren zur Rekonfiguration eines Telekommunikations-Unterwassersystems (100) gemäß Anspruch 12, **dadurch gekennzeichnet, dass** die Schaltvorgänge durch die gleichzeitige und gekoppelte Verschiebung der ersten beweglichen Teile (71 bis 71") der Cleitkontakte (7 bis '7' ' ) durchgeführt werden.

14. Verfahren zur Rekonfiguration eines Telekommunikations-Unterwassersystems (100) gemäß einem der Ansprüche 12 oder 13, **dadurch gekennzeichnet, dass** es vor dem genannten Übertragungsschritt einen Schritt zur Anpassung der Spannung (VA, VB) der terrestrischen Terminals (1A, 1B), die dem Stammstrom (i1) zugeordnet sind, umfasst, so dass der genannte Grenzwert, unter Beibehaltung des Stammstroms erhalten wird.

15. Verfahren zur Rekonfiguration eines Telekommunikations-Unterwassersystems (100) gemäß einem der Ansprüche 12 oder 13, **dadurch gekennzeichnet**, das es nach dem genannten Übertragungsschritt einen Schritt zur stufenweisen Korrektur der Spannung (VA, VB) der terrestrischen Terminals (1A, 1B), die dem Stammstrom (11) zugeordnet sind, umfasst, so dass der genannte Grenzwert unter Beibehaltung des Stammstroms erhalten wird.
